# EUROPÄISCHE PATENTANMELDUNG

(11) **EP 3 641 278 A1**
(43) Veröffentlichungstag der Anmeldung: **22.04.2020**
(21) Anmeldenummer: 18200937.3
(22) Anmeldetag: 17.10.2018
(51) Int. Cl.: H04L 29/14, H04L 29/12, H04L 12/713

(54) **VERFAHREN ZUR BEREITSTELLUNG REDUNDANTER RELAY-, INSBESONDERE ROUTING FUNKTION, SYSTEM, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Gerlach, Hendrik, 91058 Erlangen (DE); Höme, Stephan, 91126 Schwabach (DE); Mehn, Martin, 91074 Herzogenaurach (DE)

(57) **Zusammenfassung**

Die Erfindung betrifft ein Verfahren zur Bereitstellung redundanter Relay-, insbesondere Routing-Funktion in einem Netzwerk, in dem ein überlagertes Teilnetzwerk (4) über redundante Relays, insbesondere Router (2, 3) mit einem unterlagerten Teilnetzwerk (5) verbunden ist, bei dem von den redundanten Relays (2, 3) immer maximal eines in einem aktiven Modus betrieben wird, während sich das oder die verbleibenden Relays (2, 3) im Standby-Modus befinden, wobei jedes redundante Relay (2, 3) ein Relay-Redundanz-Modul (10) zur Steuerung des Relay-Modus und einen DHCPv6-Client (7) zur Abwicklung einer Präfix-Delegation, insbesondere gemäß RFC 3633, umfasst, und die redundanten Relays (2, 3) jeweils ein Relay-Kontroll-Modul (13) aufweisen, dem das Relay-Redundanz-Modul (10) des jeweiligen Relays (2, 3) den momentanen Relay-Modus signalisiert, und das Relay-Kontroll-Modul (13) des jeweils aktiven Relays (2, 3) eine virtuelle DUID seines DHCPv6-Clients (7) und/oder ein dem aktiven Relay (2, 3) delegiertes Präfix auf das oder jedes im Standby-Modus befindlichen Relay (2, 3) synchronisiert. Darüber hinaus betrifft die Erfindung ein System, ein Computerprogramm und ein computerlesbares Medium.

## Beschreibung

Die Erfindung betrifft ein Verfahren zur Bereitstellung redundanter Relay-, insbesondere Routing-Funktion in einem insbesondere industriellen Netzwerk, in dem ein überlagertes Teilnetzwerk über zwei oder mehr redundante Relays, insbesondere Router mit einem unterlagerten Teilnetzwerk verbunden ist, bei dem von den redundanten Relays immer maximal eines in einem aktiven Modus betrieben wird, während sich das oder die verbleibenden Relays im Standby-Modus befinden, wobei jedes redundante Relay ein Relay-Redundanz-Modul zur Steuerung des Relay-Modus aufweist, und für den Fall, dass das momentan aktive Relay ausfällt, das oder genau eines der verbleibenden redundanten Relays von dessen Relay-Redundanz-Modul aktiviert wird.

Darüber hinaus betrifft die Erfindung ein System zur Bereitstellung redundanter Relay-, insbesondere Routing-Funktion umfassend zwei oder mehr redundante Relays, insbesondere Router, die ein überlagertes Teilnetzwerk mit einem unterlagerten Teilnetzwerk verbinden oder verbinden können, wobei jedes redundante Relay ein Relay-Redundanz-Modul aufweist, und wobei das System derart ausgebildet und/oder eingerichtet ist, dass von den redundanten Relays immer maximal eines in einem aktiven Modus betrieben wird, während sich das oder die verbleibenden Relays im Standby-Modus befinden, und für den Fall, dass das momentan aktive Relay ausfällt, das oder genau eines der verbleibenden redundanten Relays von dessen Relay-Redundanz-Modul aktiviert wird. Weiterhin betrifft die Erfindung ein Computerprogramm und ein computerlesbares Medium.

Im industriellen Bereich, insbesondere in hierarchischen Automatisierungsnetzen, kommen IPv6-Router sowie NAT64-Router zum Einsatz. Durch Router können relativ einfach so genannte "Netztrennungen" erreicht werden, durch welche beispielsweise eine Kommunikationslast in Folge von Broadcast-Nachrichten eingedämmt bleibt. Das IP-Routing ist essentiell, um trotz der Netztrennung eine Ende-zu-Ende-Konnektivität auf IP-Ebene zu ermöglichen.

Um zu verhindern, dass das mit Netztrennungen einhergehende IP-Routing umfangreiches IT-Knowhow beim Anwender erfordert, können autokonfigurierende Router zum Einsatz kommen.

Insbesondere für einen industriellen Einsatz ist neben einer möglichst weitreichenden automatischen Konfiguration auch eine möglichst hohe Verfügbarkeit, gerade von Infrastrukturkomponenten, wie etwa Relays, insbesondere IPv6- und NAT64-Routern, wichtig. Eine hohe Verfügbarkeit kann prinzipiell durch Bereitstellung von Ersatzrelays bzw. Ersatzroutern, welche für ein ausgefallenes Gerät/eine ausgefalle Funktion übernehmen bzw. "einspringen", erzielt werden.

Sowohl bei IPv4 als auch bei IPv6 ist der eigentliche Routing-Prozess zustandslos. Für einen zustandslosen Fall kann vergleichsweise einfach von einem ausgefallenen Router auf einen Ersatzrouter umgeschaltet werden. Dies insbesondere ohne dass der Ersatzrouter zunächst auf den Zustand des ausgefallenen Routers aufsynchronisiert sein muss.

Die Anmelderin hat insbesondere für den Kontext industrieller Automatisierungsanwendungen eine Reihe von Autokonfigurationsmechanismen entwickelt. Beispielhaft sei hier auf die EP 2 940 972 A1, die EP 2 955 904 B1, EP 3 076 636 B1, EP 3 062 490 B1 und EP 3 091 714 B1 verwiesen.

Durch die Autokonfiguration kann ein wesentliches zustandsbehaftetes Element hinzukommen: die automatische Präfix-Konfiguration, also die automatische Konfiguration des Subnetzbandes.

Den standardisierten, funktionalen "Unterbau" von autokonfigurierenden IPv6- und NAT64-Routern kann dabei die so genannte "Präfix-Delegation" bilden (siehe insbesondere RFC 3633, wobei RFC für "Request For Comments" steht, und der RFC 3633 unter https://tools.ietf.org/html/rfc3633 abrufbar ist).

Die Präfix-Delegation basiert technisch auf DHCPv6, insbesondere entsprechend RFC 3315, und bevorzugt auf der so genannten "zustandsbehafteten" ("stateful") Variante von DHCPv6. Findet eine Präfix-Delegation statt, wird in die eigentlich zustandslosen Relays, insbesondere IPv6- bzw. NAT64-Router Zustand eingebracht, der insbesondere für eine Autokonfiguration erforderlich ist.

Im industriellen Bereich besteht Bedarf an einer hohen Verfügbarkeit auch für den Fall, dass automatisch konfigurierende Relays, insbesondere Router zum Einsatz kommen.

Aus dem Stand der Technik sind verschiedene Redundanzmechanismen vorbekannt.

Für IP-Router existiert das so genannte Common Address Redundancy Protocol (CARP) sowie das Virtual Router Redundancy Protocol (VRRP) (siehe unter anderem RFC 5798). Demgemäß erhält eine Gruppe von Routern eine gemeinsame virtuelle IP-Adresse und oftmals auch eine gemeinsame virtuelle MAC-Adresse. Dabei sind IP- und MAC-Adresse nur auf dem jeweils aktiven Router geschaltet. Fällt der aktive Router aus, wird ein anderer Router aktiviert und reklamiert die virtuellen IP- und MAC-Adresse für sich. In Hinblick auf IPv6 hat dieses Vorgehen den Vorteil, dass nicht erst die "Neighbour Unreachability Detection" (siehe Abschnitt 7.3 in RFC 4861) ansprechen muss, damit ein einzelner IPv6-Knoten vom ausgefallenen IPv6-Router auf einen Ersatz-Router umschaltet. Vielmehr erfolgt die Umschaltung für die IPv6-Knoten unsichtbar, da sowohl die IPv6-Adresse des Routers als auch dessen MAC-Adresse unverändert bleibt.

Auch DHCPv6 kennt einen Redundanzmechanismus (siehe insbesondere die RFCs 6853 "DHCPv6 Redundancy Deployment Considerations" und 7031 "DHCPv6 Failover Requirements"), jedoch nur einen für die DHCPv6-Server, da das Augenmerk auf der Serverredundanz liegt. Dies dürfte nach Auffassung der Anmelderin insbesondere dem ursprünglichen Einsatzfeld des Büro- bzw. Heimbereiches geschuldet sein, da in diesen automatisch IP-Adressen zugewiesen werden sollen, wobei irrelevant ist, welche es sind. Fällt ein Endgerät aus, muss kein im Standby wartendes Ersatzgerät möglichst rasch die Aufgaben des ausgefallenen Gerätes übernehmen. Dies insbesondere, da in der Regel keine weiteren Geräte von beispielsweise einem Heim-PC abhängig sind.

Demgegenüber sind von einem Router/NAT-Gerät in aller Regel eine Reihe von weiteren Geräten abhängig, sodass ein Ausfall hier eine größere Wirkung zeigt.

Schließlich ist der Anmelderin bekannt, dass im Unternehmensbereich IP- und NAT-Router oftmals von IT-Fachleuten statisch konfiguriert werden. Dabei ist der Anwender insbesondere in Form eines IT-Experten dafür zuständig, dass bei Ausfall eines aktiven Routers ein Ersatzgerät wieder für den Redundanzbetrieb konfiguriert wird. Dies ist mit nicht unerheblichem Personal- und Zeitaufwand verbunden.

Im industriellen Bereich besteht Bedarf an einer hohen Verfügbarkeit auch automatisch konfigurierender Relays, insbesondere Router.

Es ist daher eine Aufgabe der vorliegenden Erfindung, ein Verfahren der eingangs genannten Art anzugeben, welches eine erhöhte Ausfallsicherheit auch für Relays bzw. IPv6- bzw. NAT64-Router mit zustandsbehafteter Autokonfiguration ermöglicht. Darüber hinaus ist es eine Aufgabe der vorliegenden Erfindung, ein System zur Durchführung eines solchen Verfahrens anzugeben.

Bei einem Verfahren der eingangsgenannten Art wird diese Aufgabe dadurch gelöst, dass die redundanten Relays, insbesondere Router jeweils einen DHCPv6-Client zur Abwicklung einer Präfix-Delegation, insbesondere gemäß RFC 3633, umfassen, wobei immer nur der DHCPv6-Client des gerade aktiven Relays die Präfix-Delegation, insbesondere gemäß RFC 3633, abwickelt, und die redundanten Relays jeweils ein Relay-Kontroll-Modul aufweisen, dem das Relay-Redundanz-Modul des jeweiligen Relays den momentanen Relay-Modus signalisiert, und das Relay-Kontroll-Modul des jeweils aktiven Relays eine virtuelle DUID seines DHCPv6-Clients und/oder ein dem aktiven Relay delegiertes Präfix auf das oder jedes im Standby-Modus befindliche Relay, insbesondere dessen oder deren Relay-Kontroll-Module, synchronisiert, und für den Fall, dass das momentan aktive Relay ausfällt, dasRelay-Kontroll-Modul des in Reaktion auf den Ausfall aktivierten Relays dessen DHCPv6-Client startet und der DHCPv6-Client auf die über die Synchronisation erhaltene DUID und/oder auf das über die Synchronisation erhaltene Präfix zurückgreift.

Bei einem System der eingangs genannten Art wird die Aufgabe ferner dadurch gelöst, dass die redundanten Relays, insbesondere Router jeweils einen DHCPv6-Client zur Abwicklung einer Präfix-Delegation, insbesondere gemäß RFC 3633, und ein Relay-Kontroll-Modul umfassen, und das System derart ausgebildet und/oder eingerichtet ist, dass immer nur der DHCPv6-Client des gerade aktiven Relays die Präfix-Delegation, insbesondere gemäß RFC 3633, abwickelt, und dass das Relay-Redundanz-Modul des jeweiligen Relays dem Relay-Kontroll-Modul des jeweiligen Relays den momentanen Relay-Modus signalisiert, und das Relay-Kontroll-Modul des jeweils aktiven Relays eine virtuelle DUID seines DHCPv6-Clients und/oder ein dem aktiven Relay delegiertes Präfix auf das oder jedes im Standby-Modus befindliche Relay, insbesondere dessen oder deren Relay-Kontroll-Module, synchronisiert, und für den Fall, dass das momentan aktive Relay ausfällt, das Relay-Kontroll-Modul des in Reaktion auf den Ausfall aktivierten Relays dessen DHCPv6-Client startet und der DHCPv6-Client auf die über die Synchronisation erhaltene DUID und/oder auf das über die Synchronisation erhaltene Präfix zurückgreift. Das erfindungsgemäße System ist zur Durchführung des erfindungsgemäßen Verfahrens ausgebildet und/oder eingerichtet. Das erfindungsgemäße System ist zur Durchführung des erfindungsgemäßen Verfahrens ausgebildet und/oder eingerichtet.

Der Grundgedanke der vorliegenden Erfindung besteht mit anderen Worten darin, einen neuartigen Synchronisationsmechanismus für die Präfix-Delegation von DHCPv6-Clients bereitzustellen. Dies macht es möglich, Autokonfigurationsmechanismen, welche auf der Präfix-Delegation aufbauen bzw. diese nutzen, auch auf redundanten Relays, insbesondere Routern einzusetzen, wodurch die Notwendigkeit für eine starre bzw. statische Konfiguration durch einen IT-Experten, der beim Einrichten der Relays bzw. Router die auszusendenden IPv6-Präfixe statisch einstellt und demgemäß bei einem Ausfall ein Ersatzgerät erneut manuell entsprechend einstellen muss, entfällt. Mit der bisherigen, statischen Konfiguration konnte die automatische Präfix-Delegation per DHCPv6 nicht im Kontext eines redundanten Relays, insbesondere Routers, genutzt werden, was durch die vorliegende Erfindung möglich wird.

Die Erfindung schlägt dabei konkret einen unterlagerten Redundanzmechanismus vor, der insbesondere auf bekannten Mechanismen für IP-Router, insbesondere CARP bzw. VRRP aufbaut, jedoch davon unabhängig ist und insbesondere keine Erweiterung dieser bekannten Mechanismen darstellt. Erfindungsgemäß wird vielmehr eine unabhängige funktionale Redundanzschicht oberhalb der IP-/MAC-Redundanzschicht vorgeschlagen. Es wird insbesondere die Autokonfigurations-Steuerungsebene ("control plane") um einen Redundanzmechanismus erweitert.

Bei einer MAC-Redundanz wird das gleiche Paket auf mehreren Pfaden gleichzeitig im Netz übertragen (sogenannte "Doppelung") und dann beim Empfänger die Doubletten innerhalb der MAC-Schicht erkannt und unterdrückt, so dass höheren Schichten, wie die IP-Schicht, keine Doubletten mehr sehen. Eine solche MAC-Redundanz wird bei der erfindungsgemäßen Vorgehensweise nicht benötigt. Ebenso wird keinerlei IP-Redundanz benötigt, in dem Sinne, dass IP-Pakete gedoppelt und über verschiedene Wege versendet werden, wobei die empfangenden IP-Stacks dann Doubletten wieder entfernen müssten, bevor die IP-Daten zu den Anwendungen gereicht werden. Die Erfindung benutzt hingegen eine IP-Redundanz in dem Sinne, dass keine Doppelung stattfinden, sondern ein defekter Netzbereich (z.B. ein defektes Relay, insbesondere ein defekter Router oder dessen Verkabelung) umgangen wird, also ganz im ursprünglichen Sinne der IP-Architektur. Das Umgehen erfolgt insbesondere durch Umkonfiguration von Routen, wobei bekannte Mechanismen genutzt werden können, bevorzugt Router Advertisements, Routing-Protokolle wie OSPF, RIP, usw..

Die Erfindung schlägt einen Mechanismus vor, mit dem - ausgehend von vorhandenen Standard-(Software-)Komponenten die eigentliche Redundanz-Funktion in Bezug auf die Präfix-Delegation technisch gelöst werden kann bzw. wird.

Durch die erfindungsgemäße Vorgehensweise wird es möglich, dass sich redundante Relays, insbesondere Router, neben einer virtuellen MAC- und IP-Adresse auch eine DHCPv6 Client DUID teilen, also einen sogenannten DHCP Unique Identifier. Diese Client DUID identifiziert das logische, aktive Relay, insbesondere den logischen, aktiven Router, gegenüber der überlagerten Ebene, die das Präfix delegiert. Der Status einer DHCPv6 Präfix Delegation wird von einem aktiven Relay, insbesondere Router auf einen oder mehrere Ersatzrelays, insbesondere -router synchronisiert. Bei einer Redundanz-Umschaltung gemäß der vorliegenden Erfindung wird der Zustand mit auf das neue Relay, insbesondere den neuen Router, also das Ersatzrelay bzw. den den Ersatzrouter übernommen und somit auch die Client DUID "umgezogen".

Fällt ein aktives Relay, insbesondere ein aktiver Router aus, kann ein Ersatzrelay, insbesondere Ersatzrouter übernehmen, wobei der Wechsel - mit Ausnahme eines etwaigen vorrübergehenden Paketverlustes - für am unterlagerten, Downstream-Netz angeschlossene IPv6-Knoten unsichtbar ist. Insbesondere bleiben die IPv6-Adresse und MAC des autokonfigurierenden Relays bzw. Routers konstant. Gleichzeitig bleibt auch aus Sicht des überlagerten, delegierenden Routers die Identität des Relays bzw. Routers, insbesondere IPv6-Routers, gleich. Bei IPv6 ist die Identität von Clients allein an deren DUID gekoppelt und nicht an deren MAC-Adresse.

So wird es möglich, dass auch Automatisierungsanwender den Mehrwert der Redundanz ihrer Netzknoten erhalten, ohne dass sie hierfür spezielles IT-Know-How erwerben oder IT-Personal einbinden müssen.

Hierfür weisen die zwei - oder auch mehr - redundanten Relays, insbesondere Router erfindungsgemäß jeweils ein Relay-Kontroll-Modul auf, welches einerseits dafür sorgt, dass das momentan aktive Relay den Status der DHCPv6 Präfix Delegation auf den oder die weiteren, im Standby-Modus befindlichen Relays, insbesondere deren Relay-Kontroll-Module, synchronisiert wird, damit er bei einem Ausfall des aktiven Relays, insbesondere Routers dort zur Verfügung steht. Der Zustand des DHCPV6 Clients des (jeweils) aktiven Relays, insbesondere Routers kann beispielsweise in einer Datei im Dateisystem des aktiven Relays, insbesondere Routers gespeichert sein bzw. werden.

Die Synchronisation der virtuellen DUID und/oder des delegierten Präfixes kann beispielsweise erfolgen, indem das Relay-Kontroll-Modul des jeweils aktiven Relays die virtuelle DUID und/oder das delegierte Präfix dem Relay-Kontroll-Modul des oder jeden Relays im Standby-Modus bekannt gibt. Die Synchronisation erfolgt bevorzugt per Protokoll. Beispielsweise kann eine "Secure Remote Copy" der Zustandsdaten in Form einer Datei im Dateisystem des aktiven Relays bzw. Routers in das Dateisystem des bzw. der Relays bzw. Router(s) im Standby-Modus erfolgen.

Dass sich ein Relay, insbesondere Router, im aktiven Zustand befindet, bedeutet insbesondere, dass dieses bzw. dieser die Funktion übernimmt, in an sich bekannter Weise Pakete aus dem überlagerten in das unterlagerte (Teil-)Netzwerk weiterzuleiten, während der oder die Relays, insbesondere Router im passiven bzw. Standby-Modus dies nicht tun, sondern nur bereitstehen und "warten", um im Falle eines Ausfalls des aktiven Relays bzw. Routers für diesen übernehmen zu können.

Ein Relay- bzw. Router-Ausfall kann beispielsweise auf einen Ausfall der Geräte-Hardware und/oder einen Absturz der Relay- bzw. Router-Software und/oder einen Ausfall der Stromversorgung und/oder einen Defekt in der Netzverkabelung zurückzuführen bzw. dadurch bedingt sein.

Unter einem Relay im Sinne der vorliegenden Anmeldung ist insbesondere eine Funktion der Schicht n, die Daten, die sie von einer Entität empfangen hat, an eine andere Entität weiterleitet, zu verstehen, bevorzugt im Sinne von ISO/IEC7498-1:1994, Klausel 5.3.1.6.

Ein Relay, insbesondere ein Relay der Schicht 3, kann in Form eines Routers gegeben sein.

Unter einem Router kann insbesondere jede Funktion bzw. jeder Knoten (bzw. jedes Gerät) zu verstehen sein, welcher Pakete weiterleitet, die nicht explizit an ihn adressiert sind, bevorzugt im Sinne von RFC 4861.

Bei einem Relay, insbesondere Router, kann es sich beispielsweise um ein (separates) Gerät bzw. eine (separate) Hardware-Komponente handeln, welche ausgebildet und/oder eingerichtet ist, diese Funktion zu erfüllen. Selbstverständlich ist es auch möglich, dass ein Relay als "Software-Relay" bzw. "Soft-Relay" bzw. ein Router als "Software-Router" bzw. "Soft-Router" vorliegt, etwa in Form eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist. Ein Relay bzw. Router bzw. die Relay- oder Router-Funktion kann beispielsweise auch in eine Steuerung, etwa eine speicherprogrammierbare Steuerung (SPS) eines Automatisierungssystems oder in ein anderes Gerät integriert sein, dies sowohl in Form von Hardware- als auch Software.

Unter den Begriff Relay bzw. Router im Sinne der vorliegenden Anmeldung fallen sämtliche der vorgenannten Möglichkeiten, insbesondere auch "Soft-Relays"/"Soft-Router" sowie Geräte, die eigentlich andere Funktionen ausführen bzw. einem anderen Zweck dienen, aber auch eine Relay- bzw. Router-Funktion übernehmen, also insbesondere auch Daten weiterleiten, die nicht explizit an sie adressiert sind. Zum Beispiel kann auch ein Automatisierungsgerät, etwa eine insbesondere speicherprogrammierbare Steuerung, mit Relay- bzw. Router-Funktion als Relay bzw. Router gemäß der vorliegenden Erfindung zu erachten sein, bzw., wenn in diese eine separate Einrichtung, die entsprechend ausgebildet und/oder eingerichtet ist, integriert ist, umfasst eine solche Steuerung ein Relay bzw. einen Router im Sinne der vorliegenden Erfindung.

Üblicherweise hat ein Relay bzw. Router wenigstens ein Upstream-Interface und wenigstens ein Downstream-Interface. Es kann aber auch sein, dass ein Relay bzw. Router nur ein einziges (physisches) Interface aufweist, und die Unterscheidung zwischen Up- und Downstream allein Software-basiert erfolgt. Als Interface kann ein Port eines Relays bzw. Routers dienen.

Bei einem Upstream-Interface, also einer Upstream-Schnittstelle eines Relays bzw. Routers handelt es sich insbesondere um ein Interface, welches in Richtung wenigstens eines überlagerten (Teil-)Netzes bzw. Subnetzes und/oder Relays bzw. Routers zeigt. Ein Downstream-Interface, also eine Downstream-Schnittstelle, ist insbesondere ein solches, welches in Richtung wenigstens eines unterlagerten (Teil-)Netzes bzw. Subnetzes zeigt.

Insbesondere für den Fall, dass die redundanten Relays in Form von Routern gegeben sind, umfassen diese neben dem Relay-Redundanz- und dem Relay-Kontroll-Modul, die im Falle eines Routers auch als Router-Redundanz- und Router-Kontroll-Module bezeichnet werden können, weiterhin zweckmäßiger Weise jeweils ein Router-Advertisement-Modul, mittels dem Router Advertisement Nachrichten in dem unterlagerten Netzwerk bekanntgegeben werden können. Die Router-Advertisement-Module sind bevorzugt für das korrekte Abwickeln des Router-Advertisement-Protokolls ausgebildet und/oder eingerichtet.

Die Router-Advertisement-Module können jeweils eine Kombination von Hard- und Software umfassen oder durch eine solche gebildet werden oder auch rein Software- oder rein Hardware-implementiert sein. Die Router-Advertisement-Module können beispielsweise jeweils einen Router-Advertisement Daemon (RAD oder radvd) umfassen oder durch einen solchen gegeben sein, ggf. in Kombination mit geeigneter Hardware.

Auch die Relay- bzw. Router-Kontroll-Module können jeweils rein Software- oder auch rein Hardware-implementiert sein, bzw. eine Kombination von Software und insbesondere speziell für diese vorgesehener Hardware umfassen.

Die Relay- bzw. Router-Kontroll-Module übernehmen - neben der Zustands-Synchronisation im Falle des aktiven Routers - das korrekte Orchestrieren der beteiligten DHCPv6-Clients und insbesondere Router-Advertisement-Module.

Wird dem Relay-Kontroll-Modul eines redundanten Relays insbesondere von dem Relay--Redundanz-Modul dieses Relays gemeldet, dass das Relay in den aktiven Zustand überführt wurde, aktiviert das Relay-Kontroll-Modul den DHCPv6-Client und - vor allem in dem Falle, dass redundanten Relays in Form von redundanten Routern vorliegen - insbesondere das Router Advertisement Modul.

Das Router-Advertisement-Modul eines Routers, der (jeweils) in Reaktion auf den Ausfall eines zuvor aktiven Routers in den aktiven Zustand überführten wird bzw. wurde, hält bevorzugt das über die Synchronisation erhaltene Präfix im unterlagerten Netzwerk aktiv, gibt dieses Präfix insbesondere an dem unterlagerten Netzwerk angeschlossenen IPv6-Teilnehmern, bevorzugt gemäß RFC 4861, bekannt.

Das Relay- bzw. Router-Kontroll-Modul des oder der verbleibenden, momentan nicht aktiven sondern im Standby-Modus befindlichen redundanten Relays bzw. Router hingegen deaktiviert deren DHCPv6-Clients und insbesondere deren Router Advertisement Module und/oder hält diese, solange der oder die Relays bzw. Router nicht aktiv sind, deaktiviert.

Bevorzugt wickelt nur das jeweils aktive redundante Relay, insbesondere nur der jeweils aktive redundante Router die Präfix-Delegation ab, während die DHCPv6-Clients der verbleibenden redundanten Relays bzw. Router bevorzugt in einem Standby-Modus bzw. deaktiviert sind und keine Präfix-Delegation abwickeln.

Die Rolle der Relays, insbesondere Routers wird erfindungsgemäß über ein Relay-, insbesondere Router-Redundanz-Modul gesteuert, das ebenfalls jedes der redundanten Relays, insbesondere jeder der redundanten Router aufweist. Die Relay-Redundanz-Module können - genau wie die Relay-Kontroll-Module und Router-Advertisement-Module - jeweils rein Software- oder auch rein Hardware-implementiert sein, bzw. eine Kombination von Software und insbesondere speziell für diese vorgesehener Hardware umfassen.

Die Relay-, insbesondere Router-Redundanz-Module sind in bevorzugter Ausgestaltung ausgebildet und/oder eingerichtet, um das Common Address Redundancy Protocol und/oder das Virtual Router Redundancy Protokol, insbesondere gemäß RFC 5798, auszuführen, was sich bewährt hat.

In weiterer Ausführungsform kann vorgesehen sein, dass zusätzlich dazu, dass das (jeweils) in Reaktion auf den Ausfall eines zuvor aktiven Relays (neu) aktivierte Relay auf den synchronisierten Zustand zurückgreift, dieses das über die Synchronisation erhaltene delegierte Präfix bei einem überlagerten, insbesondere dem Präfix-delegierenden Router, validiert. Das erfindungsgemäße System ist in bevorzugter Ausgestaltung entsprechend ausgebildet und/oder eingerichtet.

Zweckmäßiger Weise ist oder wird auf jedem redundanten Relay, insbesondere Router die gleiche virtuelle IP-Adresse und/oder gleiche virtuelle MAC-Adresse hinterlegt, und ist oder wird die virtuelle IP-Adresse und/oder virtuelle MAC-Adresse immer nur auf dem im aktiven Modus befindlichen redundanten Relay, insbesondere Router aktiv geschaltet. Das erfindungsgemäße System ist bevorzugt entsprechend ausgestaltet und/oder eingerichtet.

Wird in Reaktion auf den Ausfall eines der redundanten Relays, insbesondere Routers, ein anderes Relay, insbesondere ein anderer Router in den aktiven Zustand überführt, reklamiert dieses bzw. dieser weiterhin bevorzugt die gleiche virtuelle IP-Adresse und/oder gleiche virtuelle MAC-Adresse für sich, die vorher vom ausgefallenen Relay, insbesondere Router verwendet wurde und die bevorzugt auch auf dem neu aktivierten Relay, insbesondere Router hinterlegt ist.

Eine weitere besonders bevorzugte Ausgestaltung sieht vor, dass dasjenige der redundanten Relays, insbesondere derjenige der redundanten Router, das bzw. der sich als allererstes bzw. allererster im aktiven Modus befindet, sich eine eindeutige, eigene DHCPv6-Client DUID erzeugt. Dies kann insbesondere geschehen, indem es bzw. er die DUID um ein eindeutiges Bitmuster erweitert oder ersetzt, wobei das eindeutige Bitmuster beispielsweise durch die Geräte-MAC-Adresse dieses Relays bzw. Routers und/oder eine aktuelle Systemzeit gegeben sein kann.

Praktischerweise wird die Client DUID entsprechend RFC 3315 nicht alleine aus der (virtuellen) MAC-Adresse gebildet. Da diese MAC-Adresse in der Regel nur innerhalb des einzelnen Upstream- oder Downstream-Netzes eindeutig ist, kann es zu DUID-Kollisionen bei einem überlagerten, delegierenden Router kommen. Dies umso mehr, wenn Relays bzw. Router analog wie Serienmaschinen mehrfach identisch verbaut werden. Aus diesem Grund vereinzeln die aktiven Relays bzw. Router bevorzugt in ihrem allerersten Anlauf ihre Client DUIDs, was durch Erweitern/Ersetzen der DUID durch ein eindeutiges Bitmuster möglich ist. Das erfindungsgemäße System ist in bevorzugter Ausführung entsprechend ausgestaltet und/oder eingerichtet.

Es kann vorgesehen sein, dass es sich bei wenigstens einem, bevorzugt allen redundanten Relays um ein Gateway, insbesondere ein Application Layer Gateway (ALG) handelt. Diese besitzen in der Regel eine oder auch mehrere IPv6-Adresse(n) und können ein Applikationsprotokoll via IPv6 auf ein bzw. das gleiche Applikationsprotokoll beziehungsweise einem Nicht-IP-Protokoll absetzen.

Es können auch Relays in Form von Routern zum Einsatz kommen. Dann kann vorgesehen sein, dass es sich bei wenigstens einem der redundanten Relays um einen IPv6-Router handelt. Alternativ oder zusätzlich handelt es sich bei wenigstens einem der redundanten Relays um einen NAT64-Router. Selbstverständlich können auch sämtliche redundanten Relays in Form von IPv6-Routern oder sämtliche redundanten Relays in Form von NAT64-Routern vorliegen.

Ein weiterer Gegenstand der Erfindung ist ein Computerprogramm, das Programmcodemittel zur Durchführung der Schritte des erfindungsgemäßen Verfahrens zur Bereitstellung redundanter Routing-Funktionen umfasst.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Bereitstellung redundanter Routing-Funktionen durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

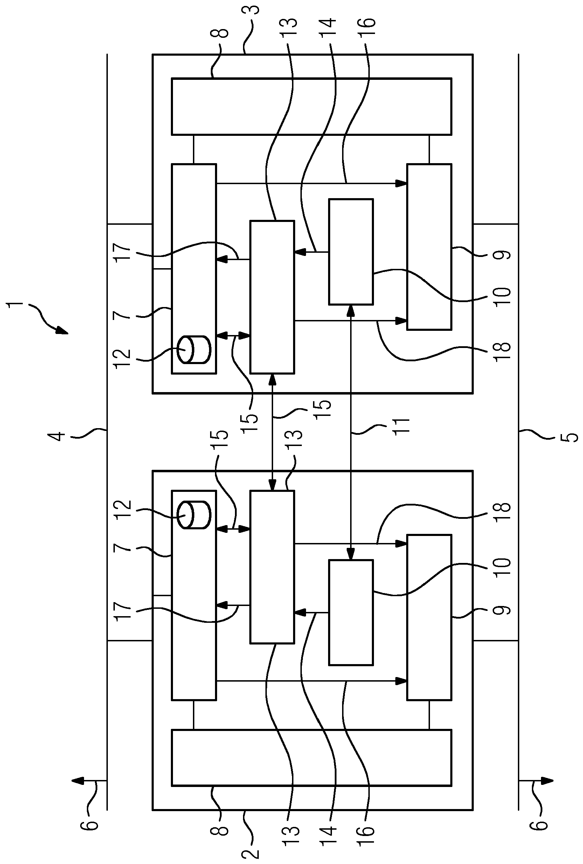

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich.

Die einzige Figur zeigt eine rein schematische Darstellung eines Ausführungsbeispiels eines erfindungsgemäßen Systems.

Dargestellt ist ein Ausführungsbeispiel eines erfindungsgemäßen Systems 1 zur Bereitstellung redundanter Relay-, vorliegend Routingfunktion.

Das System 1 umfasst zwei redundante Relays, die bei dem dargestellten Ausführungsbeispiel durch zwei redundante Router 2, 3 gegeben sind, die ein überlagertes Upstream-Teilnetzwerk 4 mit einem unterlagerten Downstream-Teilnetzwerk 5 eines in der Figur nicht weiter dargestellten industriellen Netzwerkes einer Automatisierungslösung verbinden. Das Upstream- und das Downstream-Teilnetzwerk 4, 5 sind in der Figur nur rein schematisch, u.a. durch einen nach oben bzw. nach unten weisenden Pfeil 6 dargestellt. Jeder der beiden redundanten Router 2, 3 weist ein in der Figur nicht gezeigtes Upstream Interface auf, welches mit dem Upstream-Teilnetzwerk 4 verbunden ist, sowie ein in der Figur ebenfalls nicht gezeigtes Downstream-Interface, welches mit dem Downstream-Teilnetzwerk 5 verbunden ist.

Jeder der beiden redundanten Router 2, 3 umfasst weiterhin ein DHCPv6-Client 7, einen IP-Stack 8 und ein Router-Advertisement-Modul 9, das in an sich bekannter Weise für das korrekte Abwickeln des Advertisement-Protokolls ausgebildet und eingerichtet ist. Die Router-Advertisement-Module 9 sind vorliegend als Router-Advertisement-Dämonen (RADVD) gegeben bzw. umfassen jeweils einen solchen. Der DHCPv6-client 7 und der IPv6-Stack 8 stellen ebenfalls Elemente dar, die von Routern gemäß dem Stand der Technik hinlänglich bekannt sind, so dass auf diese nicht weiter eingegangen wird.

In Betrieb ist immer nur maximal einer der beiden redundanten Router 2, 3 im aktiven Modus, während der andere im Standby-Modus ist und "wartet", um für den Fall, dass der bisher aktive Router ausfällt, insbesondere keine Pakete mehr weiterleitet bzw. weiterleiten kann, für diesen übernehmen zu können. Ein Router-Ausfall kann beispielsweise auf einen Ausfall der Geräte-Hardware und/oder einen Absturz der Router-Software und/oder einen Ausfall der Stromversorgung und/oder einen Defekt in der Netzverkabelung zurückzuführen bzw. dadurch bedingt sein. Im Folgenden wird angenommen, dass sich in einer Ausgangssituation der in der Figur linke Router 2 im aktiven Modus befindet und der in der Figur rechte Router 3 im Standby-Modus, wobei klar ist, dass die Rollen ebenso vertauscht sein könnten.

Nur der im aktiven Modus befindliche Router 2, 3 übernimmt die Routing-Funktion und leitete in an sich bekannter Weise Pakete aus dem überlagerten Teilnetzwerk 4 in das unterlagerte Teilnetzwerk 5 weiter.

Jeder der beiden redundanten Router 3 des Systems 1 weist zusätzlich zu den bereits genannten Modulen bzw. Komponenten ein Router-Redundanz-Modul 10 auf, welches den Modus des jeweiligen Routers 2, 3, also dessen Rolle steuert.

Vorliegend sind die Router-Redundanz-Module 10 der beiden redundanten Router 2, 3 ausgebildet und/oder eingerichtet, um das sogenannte Common Address Redundancy Protocol (CARP) auszuführen. Alternativ oder zusätzlich können sie ausgebildet und/oder eingerichtet sein, um das sogenannte Common Adress Redundancy Protocol (VRRP), insbesondere gemäß RFC 5798 auszuführen.

Beide redundanten Router 2, 3 erhalten eine gemeinsame virtuelle IP-Adresse und vorliegend auch eine gemeinsame virtuelle Mac-Adresse (zu virtuellen IP- und MAC-Adressen siehe insbesondere RFC 5798). Dabei sind die virtuelle IP- und Mac-Adresse nur auf dem jeweils aktiven Router 2, 3, vorliegend also dem linken Router 2, aktiv geschaltet. Fällt der aktive Router 2 aus, so wird der andere Router 3 vom Standby- in den aktiven Modus geschaltet und reklamiert die virtuellen IP- und Mac-Adressen für sich.

Die Router-Redundanzmodule 10 der beiden Router 2, 3 können miteinander kommunizieren, was in der Figur durch einen die beiden Module verbindenden Pfeil 11 angedeutet ist. So ist es möglich, dass der im Standby-Modus befindliche Router 3 informiert werden kann, wenn der aktive Router 3 ausfällt und er für diesen übernehmen muss.

Konkret sendet das Router-Redundanz-Modul 10 des momentan aktiven Routers 3 zyklisch, mit geeignetem zeitlichen Abstand von beispielsweise 1 Sekunde eine Nachricht an das Router-Redundanz-Modul 10, des im Standby-Modus befindlichen Routers 2 (zu dem zyklischen Senden siehe insbesondere "Adver_Timer" gemäß RFC 5798). Fällt der aktive Router 3 aus, bleibt diese Nachricht aus und der bis dahin im Standby-Modus befindliche Router 3 wird in Reaktion auf das Ausbleiben der Nachricht von seinem Router-Redundanz-Modul 10 in den aktiven Zustand überführt.

Es sei angemerkt, dass im Rahmen des vorliegend beschriebenen Ausführungsbeispiels das erfindungsgemäße System 1 zwei redundante Router 2, 3 umfasst. Selbstverständlich können auch drei oder mehrere redundante Router 2, 3 vorgesehen sein und in diesem Falle können ebenfalls alle Router-Redundanz-Module 10 miteinander kommunizieren. Sind drei oder mehr redundante Router 2, 3 vorhanden, wird im Falle des Ausfalls eines aktiven Routers 2 eine Entscheidung getroffen, welcher der zwei oder mehr verbleibenden Router 2, 3 in den aktiven Modus überführt wird. Hierzu kann beispielsweise eine Prioritätsreihenfolge vorgesehen sein. Weiterhin sein angemerkt, dass alternativ dazu, dass eine Nachricht von dem jeweils aktiven Router 2 ausbleibt, wenn dieser ausfällt, es auch möglich ist, dass erst dann eine Nachricht von dessen Router-Redundanz-Modul 10 gesendet wird, um den oder die verbleibenden redundanten Router 3 über den Ausfall zu informieren.

Bei den beiden redundanten Routern 2, 3 handelt es sich vorliegend um autokonfigurierende IPv6-Router, deren standarisierter funktionaler "Unterbau" die sogenannte Präfix-Delegation gemäß RFC 3633 ist. Alternativ dazu, dass es sich bei den beiden Routern 2, 3 - oder auch nur einem von diesen - um IPv6-Router handelt, können diese beispielsweise auch durch autokonfigurierende NAT64-Router gegeben sein.

Die Präfix-Delegation, die von dem DHCPv6-client 7 der redundanten Router 2, 3 abgewickelt werden kann, basiert technisch auf DHCPv6 entsprechend RFC 3315 und insbesondere auf der sogenannten "zustandsbehafteten" ("stateful") Variante von DHCPv6. Dadurch wird in die Router 2, 3, die ohne eine auf die Präfix-Delegation zurückgreifende Autokonfiguration zustandslos wären, Zustand eingebracht.

Der Zustand ist in der Figur rein schematisch durch ein mit dem Bezugszeichen 12 versehenes Element in dem DHCPv6-client 7 des jeweiligen redundanten Routers 2, 3 dargestellt. Der Zustand 12 umfasst vorliegend ein in den Figuren nicht näher dargestelltes Präfix, welches dem DHCPv6-client 7 des aktiven redundanten Routers 2 unter Abwicklung der Präfix-Delegation gemäß RFC3633 delegiert wird bzw. wurde, sowie eine virtuelle DHCPv6-client DUID (DUID steht dabei für DHCP Unique Identifier). Diese client DUID identifiziert den logischen, aktiven Router 2 gegenüber der überlagerten Ebene, die das Präfix delegiert, insbesondere gegenüber einem in der Figur nicht dargestellten, Präfix-delegierenden überlagerten Router.

Um auch im "zustandsbehafteten" ("stateful") Falle einen durchgehenden Service bereitstellen zu können, umfasst jeder der beiden redundanten Router 2, 3 ein Router-Kontroll-Modul 13. Diesem teilt das Router-Redundanzmodul 10 des jeweiligen Routers 2, 3 den momentanen Router-Modus mit, also, ob sich der jeweilige Router 2, 3 im aktiven oder im Standby-Modus befindet. Entsprechende Mitteilungen bzw. Nachrichten werden im Betrieb zyklisch, mit geeignetem zeitlichem Abstand (beispielsweise jede Sekunde) von dem Router-Redundanz-Modul 10 des jeweiligen Routers 2, 3 an das jeweilige Router-Kontroll-Modul 13 übermittelt. In der Figur ist dies rein schematisch durch Pfeile 14 angedeutet, welche von dem jeweiligen Router-Redundanz-Modul 10 auf das jeweilige Router-Kontroll-Modul 13 zeigen. Die Router-Redundanz-Module 10 bzw. Router 2, 3 sind entsprechend ausgebildet und eingerichtet.

Die Router-Kontroll-Module 13 sind ferner ausgebildet und/oder eingerichtet, um anhand der vom Router-Redundanz-Modul 10 signalisierten Rolle eine Zustandssynchronisation durchzuführen. Konkret sind sie ausgebildet und/oder eingerichtet, um in demjenigen Falle, dass ihnen von dem Router-Redundanz-Modul 10 des jeweiligen Routers 2, 3 signalisiert wird, dass der jeweilige Router 2, 3 sich im aktiven Modus befindet, die virtuelle DUID des DHCPv6-Clients 7 des betroffenen Routers 2, 3 sowie ein dem DHCPv6-Client 7 des betroffenen Routers 2, 3 dynamisch delegiertes Präfix auf den (ggf. die) anderen, sich im Standby-Modus befindlichen Router 2, 3 zu synchronisieren. Für den Fall, dass es drei oder mehr redundante Router 2, 3 gibt, erfolgt eine Synchronisation auf sämtliche im Standby-Modus befindliche Router. Der Zustand 12, der das delegierte Präfix und die virtuelle DUID des DHCPv6-Clients 7 umfasst,kann in dem aktiven Router 2 beispielsweise in einer Datei im Dateisystem des Routers 2 hinterlegt sein.

Die Synchronisation des Zustandes 12 erfolgt ebenfalls zyklisch (beispielsweise jede Sekunde oder mit anderem zeitlichem Abstand) und per Protokoll. In der Figur ist die Synchronisation rein schematisch durch einen die beiden Router-Kontroll-Module 13 der beiden redundanten Router 2, 3 verbindenden Doppelpfeil 15 sowie das jeweilige Router-Kontroll-Modul 13 mit dem Zustand 12 verbindende Doppelpfeile 15 angedeutet.

Vorliegend wickelt nur der aktive Router 2 die Präfix-Delegation ab, und nur der aktive Router 2 synchronisiert ein ihm delegiertes Präfix und die virtuelle DUID seines DHCPv6-Clients 7 auf den weiteren, im Standby-Modus befindlichen Router 3. Wird dem Router-Kontroll-Modul 13 eines Routers 2, 3 hingegen signalisiert, dass sich der betroffene Router 2, 3 im Standby-Modus befindet (vorliegend der Router 3), synchronisiert das keinen Zustand 12 auf den oder die verbleibenden Router 2, 3, sondern empfängt nur den Zustand 12 von dem genau einen aktiven Router 2.

Das Router-Advertisement-Modul 9 ist vorliegend dafür zuständig, dass dem DHCPv6-Client 7 des aktiven Routers 2 dynamisch zugewiesene Präfix am unterlagerten Netzwerk 5 angeschlossenen, in der Figur nicht dargestellten IPv6-Teilnehmern gemäß RFC 4861("Neighbour Discovery") bekanntzugeben. Dieser Zusammenhang ist in der Figur durch einen von dem DHCPV6-client 7 zu dem Router-Advertisement-Modul 9 weisenden Pfeil 16 dargestellt.

Infolge der Zustands-Synchronisation steht auf allen redundanten Routern 2, 3 zusätzlich zu der gleichen virtuellen Mac- und IP-Adresse (insbesondere gemäß CARP und/oder VRRP gemäß RFC 5798) auch der jeweilige Zustand 12 des aktiven redundanten Routers 2 zur Verfügung.

Neben der Zustands-Synchronisation übernehmen die Router-Kontroll-Module 13 auch das korrekte orchestrieren der beteiligten DHCPv6-Clients 7 sowie Router-Advertisement-Module 9. Konkret aktiviert das Router-Kontroll-Modul 13 eines Routers 2, 3, wenn es von dessen Router-Redundanz-Modul 10 signalisiert bekommt, dass sich der Router 2, 3 im aktiven Zustand befindet, den DHCPv6-client 7 und das Router-Advertisement-Modul 9 und hält diese aktiv, so lange der aktive Modus anhält.

Wird dem Router-Kontroll-Modul 13 eines Routers 2, 3 hingegen vom Router- Redundanz-Modul 10 gemeldet, dass sich der Router 2, 3 im Standby-Modus befindet, deaktiviert das Router-Kontroll-Modul 13 den DHCPv6-client 7 und das Router-Advertisement-Modul 9 des betroffenen Routers 2, 3 und hält diese deaktiviert, solange der Standby-Modus anhält. Dass das Router-Kontroll-Modul 13 den DHCPv6-client 7 und das Router-Advertisement-Modul 9 entsprechend beeinflusst, ist in der Figur rein schematisch durch Pfeile 17 und 18 angedeutet, welche von dem Router-Kontroll-Modul 13 auf den DHCPv6-Client 7 bzw. das Router-Advertisement-Modul 9 zeigen.

Für den Fall, dass ein Modus-Wechsel stattfindet, weil einer der Router 2, 3 ausfällt (vorliegend der aktive Router 2), wird das Router-Kontroll-Modul 13 desjenigen Routers 2, 3, der in Reaktion auf den Ausfall aktiviert wird (vorliegend der zweite redundante Router 3), den DHCPv6-client 7 dieses Routers 3 starten und dieser wird - aufgrund der Zustands-Synchronisation - im Anlauf "ganz normal" auf den synchronisierten Zustand 12 zurückgreifen. Das Starten ist systemabhängig, kann im Falle eines Linus-System mit "systemd" beispielsweise durch Ausführen des Kommandos "systemctl start dhcpd.service" erfolgen. Über den Modus-Wechsel wird das Router-Kontrollmodul 13 von dem betroffenen Router 3 von dessen Router-Redundanz-Modul 10 informiert. Auf Wunsch kann der in Reaktion auf den Ausfall des Routers 2 aktivierte Router 3 zusätzlich das delegierte Präfix beim überlagerten delegierenden Router, welcher in der Figur nicht gezeigt ist, validieren.

Parallel dazu wird das Router-Advertisement-Modul 9 des dann aktivierten Routers 2, welches - genau wie der DHCPv6-Client 7 - von dem Router-Kontroll-Modul 13 in Reaktion auf den Ausfall des anderen redundanten Routers 2 aktiviert wurde, das bisherige, über die Synchronisation erhaltene Präfix am unterlagerten Teil- bzw. Subnetz 5 weiterhin aktiv halten.

Für am unterlagerten Teilnetz 5 angeschlossene IPv6-Knoten (in der Figur nicht gezeigt) ist dieser Wechsel bis auf einem eventuell vorübergehend auftretenden Paketverlust aus diesem Netz 5 oder in dieses Netz 5 hinein unsichtbar. Insbesondere bleiben die IPV6-Adresse und Mac des Routers 2, 3 konstant. Gelichzeitig bleibt auch aus Sich des überlagerten, delegierenden Routers (in der Figur nicht gezeigt), die Identität des IPv6-Routers 2, 3 gleich. Bei IPv6 ist die Identität von Clients allein an deren DUID gekoppelt und nicht an deren MAC-Adresse.

Es kann eine Redundanzfunktion bereitgestellt und so durchgehend ein Router-Service aufrecht erhalten werden, selbst wenn einer der Router 2, 3 ausfällt und zwar im Falle autokonfigurierender, infolge dessen "zustandsbehafteter ("stateful") Router 2, 3. Automatisierungsanwender erhalten den Mehrwert der Redundanz wichtiger Infrastrukturkomponenten, insbesondere ihrer Netzknoten, ohne dass sie hierzu IT-Know-How erwerben oder IT-Personal einbinden müssen. Die Zustandssynchronisation und der Rollenwechsel laufen vollständig automatisch ab.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Bereitstellung redundanter Relay-, insbesondere Routing-Funktion in einem insbesondere industriellen Netzwerk, in dem ein überlagertes Teilnetzwerk (4) über zwei oder mehr redundante Relays, insbesondere Router (2, 3) mit einem unterlagerten Teilnetzwerk (5) verbunden ist,
bei dem
von den redundanten Relays, insbesondere Routern (2, 3) immer maximal einer in einem aktiven Modus betrieben wird, während sich der oder die verbleibenden Relays2, 3) im Standby-Modus befinden, wobei jedes redundate Relay (2, 3) ein Relay-Redundanz-Modul (10) zur Steuerung des Relays-Modus aufweist, und für den Fall, dass das momentan aktive Relay (2, 3) ausfällt, das oder genau eines der verbleibenden redundanten Relays (2, 3) insbesondere von dessen Relay-Redundanz-Modul (10) aktiviert wird,
**dadurch gekennzeichnet, dass**
die redundanten Relays (2, 3) jeweils einen DHCPv6-Client (7) zur Abwicklung einer Präfix-Delegation, insbesondere gemäß RFC 3633, umfassen, wobei immer nur der DHCPv6-Client (7) des gerade aktiven Relays die Präfix-Delegation, insbesondere gemäß RFC 3633, abwickelt, und die redundanten Relays (2, 3) jeweils ein Relay-Kontroll-Modul (13) aufweisen, dem das Relay-Redundanz-Modul (10) des jeweiligen Relays (2, 3) den momentanen Relay-Modus signalisiert, und das Relay-Kontroll-Modul (13) des jeweils aktiven Relays (2, 3) eine virtuelle DUID seines DHCPv6-Clients (7) und/oder ein dem aktiven Relay (2, 3) delegiertes Präfix auf das oder jedes im Standby-Modus befindliche Relay (2, 3), insbesondere dessen oder deren Relay-Kontroll-Module (13), synchronisiert, und für den Fall, dass das momentan aktive Relay (2, 3) ausfällt, das Relay-Kontroll-Modul (13) des in Reaktion auf den Ausfall aktivierten Relays (2, 3) dessen DHCPv6-Client (7) startet und der DHCPv6-Client (7) auf die über die Synchronisation erhaltene DUID und/oder auf das über die Synchronisation erhaltene Präfix zurückgreift.

2. Verfahren nach Anspruch 1,
**dadurch gekennzeichnet, dass**
das Relay-Redundanz-Modul (10) jedes redundanten Relays (2, 3) ausgebildet und/oder eingerichtet ist, um das Common Address Redundancy Protocol und/oder das Virtual Router Redundancy Protocol, insbesondere gemäß RFC 5798, auszuführen.

3. Verfahren nach Anspruch 1 oder 2,
**dadurch gekennzeichnet, dass**
das in Reaktion auf den Ausfall aktivierte Relay (2, 3) das über die Synchronisation erhaltene delegierte Präfix bei einem überlagerten, insbesondere dem Präfix-delegierenden Router validiert.

4. Verfahren nach einem der vorhergehenden Ansprüche,
**dadurch gekennzeichnet, dass**
die Synchronisation der virtuellen DUID und/oder des delegierten Präfixes erfolgt, indem das Relay-Kontroll-Modul (13) des jeweils aktiven Relays (2, 3) die virtuelle DUID und/oder das delegierte Präfix dem Relay-Kontroll-Modul (13) des oder jeden Relays (2, 3) im Standby-Modus bekannt gibt.

5. Verfahren nach einem der vorhergehenden Ansprüche,
**dadurch gekennzeichnet, dass**
die redundanten Relays (2, 3) jeweils ein Router Advertisement Modul (9) aufweisen, mittels dem Router Advertisement Nachrichten in dem unterlagerten Netzwerk (5) bekanntgegeben werden können, und insbesondere das Router Advertisement Modul (9) des in den aktiven Zustand überführten Relays (2, 3) das über die Synchronisation erhaltene Präfix im unterlagerten Netzwerk (5) aktiv hält, insbesondere dieses Präfix an dem unterlagerten Netzwerk (5) angeschlossenen IPv6-Teilnehmern, bevorzugt gemäß RFC 4861, bekannt gibt.

6. Verfahren nach einem der vorhergehenden Ansprüche,
**dadurch gekennzeichnet, dass**
die Synchronisation der DUID und/oder des delegierten Präfixes per Protokoll erfolgt.

7. Verfahren nach einem der vorhergehenden Ansprüche,
**dadurch gekennzeichnet, dass**
das Relay-Kontroll-Modul (13) jedes im Standby-Modus befindlichen redundanten Relays (2, 3) den DHCPv6-Client (7) und insbesondere das Router Advertisement Modul (9) des jeweiligen Relays deaktiviert bzw. deaktiviert hält.

8. Verfahren nach einem der vorhergehenden Ansprüche,
**dadurch gekennzeichnet, dass**
auf jedem redundanten Relay (2, 3) die gleiche virtuelle IP-Adresse und/oder gleiche virtuelle MAC-Adresse hinterlegt ist oder wird, und die virtuelle IP-Adresse und/oder virtuelle MAC-Adresse immer nur auf dem im aktiven Modus befindlichen redundanten Relay (2, 3) aktiv geschaltet ist oder wird.

9. Verfahren nach einem der vorhergehenden Ansprüche,
**dadurch gekennzeichnet, dass**
dasjenige der redundanten Relays (2, 3), das sich als allererster im aktiven Modus befindet, sich eine eindeutige, eigene DHCPv6-Client DUID erzeugt, insbesondere, indem es die DUID um ein eindeutiges Bitmuster erweitert oder ersetzt, wobei das eindeutige Bitmuster insbesondere durch die Geräte-MAC-Adresse dieses Relays (2, 3)und/oder eine aktuelle Systemzeit gegeben ist.

10. Verfahren nach einem der vorhergehenden Ansprüche,
**dadurch gekennzeichnet, dass**
es sich bei wenigstens einem der redundanten Relays (2, 3) um ein Application Layer Gateway und/oder bei wenigstens einem der redundanten Relays (2, 3) um einen IPv6-Router und/oder bei wenigstens einem der redundanten Relays (2, 3) um einen NAT64-Router handelt.

11. System (1) zur Bereitstellung redundanter Relay-, insbesondere Routing-Funktion umfassend zwei oder mehr redundante Relays, insbesondere Router (2, 3), die ein überlagertes Teilnetzwerk (4) mit einem unterlagerten Teilnetzwerk (5) verbinden oder verbinden können, wobei jedes redundante Relay (2, 3) ein Relay-Redundanz-Modul (10) aufweist, und wobei das System (1) derart ausgebildet und/oder eingerichtet ist, dass von den redundanten Relays (2, 3) immer maximal eines in einem aktiven Modus betrieben wird, während sich das oder die verbleibenden Relays (2, 3) im Standby-Modus befinden, und für den Fall, dass das momentan aktive Relay (2, 3) ausfällt, das oder genau eines der verbleibenden redundanten Relays (2, 3) insbesondere von dessen Relay-Redundanz-Modul (10) aktiviert wird,
**dadurch gekennzeichnet, dass**
die redundanten Relays (2, 3) jeweils einen DHCPv6-Client (7) zur Abwicklung einer Präfix-Delegation, insbesondere gemäß RFC 3633, und ein Relay-Kontroll-Modul (13) umfassen, und das System derart ausgebildet und/oder eingerichtet ist, dass immer nur der DHCPv6-Client (7) des gerade aktiven Relays (2, 3) die Präfix-Delegation, insbesondere gemäß RFC 3633, abwickelt, und dass das Relay-Redundanz-Modul (10) des jeweiligen Relays (2, 3) dem Relay-Kontroll-Modul (13) des jeweiligen Relays (2, 3) den momentanen Relay-Modus signalisiert, und das Relay-Kontroll-Modul (13) des jeweils aktiven Relays (2, 3) eine virtuelle DUID seines DHCPv6-Clients und/oder ein dem aktiven Relay (2, 3) delegiertes Präfix auf das oder jedes im Standby-Modus befindliche Relay (2, 3), insbesondere dessen oder deren Relay-Kontroll-Module (13), synchronisiert, und für den Fall, dass das momentan aktive Relay (2, 3) ausfällt, das Relay-Kontroll-Modul (13) des in Reaktion auf den Ausfall aktivierten Relays (2, 3) dessen DHCPv6-Client (7) startet und der DHCPv6-Client (7) auf die über die Synchronisation erhaltene DUID und/oder auf das über die Synchronisation erhaltene Präfix zurückgreift.

12. System (1) nach Anspruch 11,
**dadurch gekennzeichnet, dass**
das Relay-Redundanz-Modul (10) jedes redundanten Relays (2, 3) ausgebildet und/oder eingerichtet ist, um das Common Address Redundancy Protocol und/oder das Virtual Router Redundancy Protokol, insbesondere gemäß RFC 5798, auszuführen.

13. System (1) nach Anspruch 11 oder 12,
**dadurch gekennzeichnet, dass**
das System (1) derart ausgebildet und/oder eingerichtet ist, dass das in Reaktion auf den Ausfall aktivierte Relay (2, 3) das über die Synchronisation erhaltene delegierte Präfix bei einem überlagerten, insbesondere dem Präfix-delegierenden Router validiert.

14. System (1) nach einem der Ansprüche 11 bis 13,
**dadurch gekennzeichnet, dass**
das System (1) derart ausgebildet und/oder eingerichtet ist, dass die Synchronisation der virtuellen DUID und/oder des delegiertes Präfixes erfolgt, indem das Relay-Kontroll-Modul (13) des jeweils aktiven Relays (2, 3) die virtuelle DUID und/oder das delegierte Präfix dem Relay-Kontroll-Modul (13) des oder jeden Relays (2, 3) im Standby-Modus bekannt gibt.

15. System (1) nach einem der Ansprüche 11 bis 14,
**dadurch gekennzeichnet, dass**
die redundanten Relays (2, 3) jeweils ein Router Advertisement Modul (9) aufweisen, mittels dem Router Advertisement Nachrichten in dem unterlagerten Netzwerk (5) bekanntgegeben werden können, und das System (1) derart ausgebildet und/oder eingerichtet ist, dass das Router Advertisement Modul (9) des in Reaktion auf den Ausfall aktivierten Relays (2, 3) das über die Synchronisation erhaltene Präfix im unterlagerten Netzwerk (5) aktiv hält, insbesondere dieses Präfix an dem unterlagerten Netzwerk (5) angeschlossenen IPv6-Teilnehmern, bevorzugt gemäß RFC 4861, bekannt gibt.

16. System (1) nach einem der Ansprüche 11 bis 15,
**dadurch gekennzeichnet, dass**
das System (1) derart ausgebildet und/oder eingerichtet ist, dass die Synchronisation der DUID und/oder des delegierten Präfixes per Protokoll erfolgt.

17. System (1) nach einem der Ansprüche 11 bis 16,
**dadurch gekennzeichnet, dass**
das System (1) derart ausgebildet und/oder eingerichtet ist, dass das Relay-Redundanz-Modul (10) jedes im Standby-Modus befindlichen redundanten Relays (2, 3) den DHCPv6-Client (7) und insbesondere das Router Advertisement Modul (9) des jeweiligen Relays (2, 3) deaktiviert bzw. deaktiviert hält.

18. System (1) nach einem der Ansprüche 11 bis 17,
**dadurch gekennzeichnet, dass**
das System (1) derart ausgebildet und/oder eingerichtet ist, dass auf jedem redundanten Relay (2, 3) die gleiche virtuelle IP-Adresse und/oder gleiche virtuelle MAC-Adresse hinterlegt ist oder wird, und die virtuelle IP-Adresse und/oder virtuelle MAC-Adresse immer nur auf dem im aktiven Modus befindlichen redundanten Relays (2, 3) aktiv geschaltet ist.

19. System (1) nach einem der Ansprüche 11 bis 18,
**dadurch gekennzeichnet, dass**
das System (1) derart ausgebildet und/oder eingerichtet ist, dass dasjenige der redundanten Relays (2, 3), das sich als allererstes im aktiven Modus befindet, sich eine eindeutige DHCPv6-Client DUID erzeugt, insbesondere, indem es die DUID um ein eindeutiges Bitmuster erweitert oder ersetzt, wobei das eindeutige Bitmuster insbesondere durch die Geräte-MAC-Adresse dieses Relays (2, 3) und/oder eine aktuelle Systemzeit gegeben ist.

20. System (1) nach einem der Ansprüche 11 bis 19,
**dadurch gekennzeichnet, dass**
es sich bei wenigstens einem der redundanten Relays (2, 3) um ein Application Layer Gateway handelt, und oder bei wenigstens einem der redundanten Relays (2, 3) um einen IPv6-Router und/oder bei wenigstens einem der redundanten Relays (2, 3) um einen NAT64-Router handelt.

21. Computerprogramm umfassend Programmcode-Mittel zur Durchführung des Verfahrens nach einem der Ansprüche 1 bis 10.

22. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.
